(19) Europäisches Patentamt / European Patent Office / Office européen des brevets

(11) **EP 2 371 874 A1**

(12) **EUROPEAN PATENT APPLICATION**
published in accordance with Art. 153(4) EPC

(43) Date of publication:
**05.10.2011 Bulletin 2011/40**

(21) Application number: **09835026.7**

(22) Date of filing: **25.12.2009**

(51) Int Cl.:
*C08G 63/183* (2006.01)    *B29C 49/02* (2006.01)
*B29C 49/08* (2006.01)    *B65D 1/00* (2006.01)

(86) International application number:
**PCT/JP2009/071592**

(87) International publication number:
**WO 2010/074230 (01.07.2010 Gazette 2010/26)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.12.2008 JP 2008333173**
**26.12.2008 JP 2008333174**

(71) Applicant: **Toyo Seikan Kaisha, Ltd.**
**Tokyo 100-8522 (JP)**

(72) Inventors:
• **NAKAMURA, Kazuhiko**
**Yokohama-shi**
**Kanagawa 240-0062 (JP)**
• **KITANO, Yoshihiro**
**Yokohama-shi**
**Kanagawa 230-0001 (JP)**
• **KIKUCHI, Atsushi**
**Yokohama-shi**
**Kanagawa 230-0001 (JP)**

(74) Representative: **Manley, Nicholas Michael**
**W.P. Thompson & Co.**
**Coopers Building**
**Church Street**
**Liverpool L1 3AB (GB)**

(54) **ETHYLENE TEREPHTHALATE-BASED POLYESTER RESIN FOR MOLDING CONTAINER AND PROCESS FOR PRODUCING SAME**

(57) An ethylene terephthalate type polyester resin for forming containers, having an intrinsic viscosity in a range of 0.65 to 0.85 dL/g, a total content of a monohydroxyethyl terephthalate and a bishydroxyethyl terephthalate of less than 0.005% by weight, (a) a heat of fusion of not more than 50 J/g, a end temperature on melting peak on not higher than 270°C and a crystallinity of less than 0.48, or (b) an acetaldehyde concentration of 2 to 10 ppm, and satisfying at least either one of (i) a peak time of crystallization is not longer than 360 seconds and the crystallization energy ($\Delta$H) is not less than 30 J/g in the isothermal crystallization at 210°C, or (ii) components having molecular weights of not larger than 10000 are contained in not less than 8%. The polyester resin effectively prevents the problems such as a fouling of the metal mold in forming containers or a decrease in the productivity. A decreased acetaldehyde concentration provides excellent flavor-retaining property. Further, the heat-setting and mouth portion crystallization can be efficiently conducted making it possible to produce heat-resistant containers maintaining good productivity.

## Description

Technical Field:

This invention relates to an ethylene terephthalate type polyester resin and a process for its production. More specifically, the invention relates to an ethylene terephthalate type polyester resin for forming containers, containing a monohydroxyethyl terephthalate and a bishydroxyethyl terephthalate in decreased amounts and to a process for its production.

Background Art:

The containers made from a polyester resin as represented by a polyethylene terephthalate have excellent properties such as transparency, mechanical stretch, etc., and have been widely used for containing beverages, oils, seasonings and the like.
As the polyester resin used for forming the containers, there is, usually, used a polyester resin obtained by the melt state polymerization or a polyester resin obtained by the solid state polymerization through the melt state polymerization. The polyester resin produced by the melt state polymerization is inexpensively as compared to the polyester resin having the same intrinsic viscosity that is produced through the solid state polymerization and, further, has some features as containing low-melting monomers such as monohydroxyethyl terephthalate (hereinafter simply referred to as "MHET") and bishydroxyethyl terephthalate (hereinafter simply referred to as "BHET"), containing oligomers such as cyclic trimer, etc., containing volatile components such as acetaldehyde, etc. and, further, containing low molecular compounds having molecular weights of not larger than 10,000 in large amounts.
If the containers are formed by using such a polyester resin containing monomers and oligomers in large amounts, the monomers and oligomers in the polyester resin precipitate at the time of forming, in the case of the compression forming, 1 the drops adhere to the surfaces of the conveyer metal molds being caused by the presence of the MHET and BHET, so making it difficult to correctly feed the molten resin masses into the cavities and deteriorating the productivity. In the case of the injection forming, the oligomers such as cyclic trimer and the like adhere and clog in the air vent of the metal molds, requiring frequent cleaning. At the time of heat-setting for enhancing a heat resistance to the containers, further, the cyclic trimer adheres onto the surfaces of the metal molds being caused by the presence of the MET and BHET, in the result, the transparency of the containers is decreased due to the roughened surfaces, and frequent cleaning of the metal molds is required.
To solve the above problems, for example, the following patent document 1 proposes a process for producing a polyester resin composition by bringing a polyester resin composition into contact with water of not lower than 50˚C but not higher than 110˚C for not less than 5 minutes but not more than 5 hours, and maintaining the polyester resin composition at a temperature of not lower than 110˚C but not higher than 180 ˚C in a state where the pressure is lowered to be not higher than 4 kPa for not less than 3 hours.

Prior Art Document:

Patent document 1: JP-A-2001-121273

Outline of the Invention:

Problems that the Invention is to Solve:

According tao the above patent document 1, the catalyst presented in the polyester resin must be inactivated by the treatment with hot water and, further, the heat treatment is necessary requiring many numbers of steps, which is not fully satisfactory from the standpoint of economy.
Further, the polyester resin that is subjected to the solid state polymerization after the melt state polymerization contains MHET, BHET, cyclic trimer and acetaldehyde in decreased amounts, but is expensive and has a problem from the standpoint of economy if its used for forming containers for general use. Besides, the polyester resin pellets subjected to the solid state polymerization have a high crystallinity and poor melting property. Therefore, the formed articles become cloudy being caused by the presence of unmelted components. If the forming is conducted at a high temperature to prevent this, then the resin is deteriorate by the thermal decomposition. Besides, it becomes difficult to efficiently conduct the heat-setting for enhancing the heat resistance due to that the resin is crystallizes at a slow rate.
It is, therefore, an object of the present invention to provide a polyester resin which contains the monomers such as MHET and BHET in decreased amounts and is free from the above-mentioned problems that occur at the time of forming the containers.

Another object of the present invention is to provide a preform which enables to efficiently conduct the crystallization of a mouth portion and a heat-set, and is capable of forming a heat-resistant container excelling in productivity and economy.

A further object of the present invention is to provide a preform having a low acetaldehyde concentration and is capable of forming a heat-resistant container having excellent flavor-retaining property.

A still further object of the present invention is to provide a process capable of easily producing the polyester resin containing the monomers such as MHET and BHET in decreased amounts from a melt state polymerized polyester resin through a decreased number of steps.

Means for Solving the Problems:

According to a first aspect of the present invention, there is provided an ethylene terephthalate type polyester resin for forming containers, having an intrinsic viscosity in a range of 0.65 to 0.85 dL/g, a total content of an MHET and a BHET of less than 0.005% by weight, a heat of fusion of not more than 50 J/g, a end temperature of melting peak of not higher than 270˚C and a crystallinity of less than 0.48.

According to the present invention, further, there is provided a preform obtained by compression-forming or injection-forming a molten resin comprising the ethylene terephthalate type polyester resin of the above first embodiment, the preform having a total content of the MHET and the BHET of not more than 0.010% by weight, an acetaldehyde content of not more than 15 ppm and an intrinsic viscosity that varies by not more than 3% from the intrinsic viscosity of the ethylene terephthalate type polyester resin.

According to a second aspect of the present invention, there is provided an ethylene terephthalate type polyester resin for forming heat-resistant containers, having an intrinsic viscosity in a range of 0.65 to 0.80 dL/g, a total content of an MEET and a BHET of less than 0.005% by weight, an acetaldehyde content of 2 to 10 ppm, and satisfying at least either one of:

(i) a peak time of crystallization is not longer than 360 seconds and the crystallization energy (AH) is not less than 30 J/g in the isothermal crystallization at 210˚C; or
(ii) components having molecular weights of not larger than 10000 are contained in not less than 8%.

It is desired that the ethylene terephthalate type polyester resin for forming heat-resistant containers of the present invention contains a diethylene glycol (hereinafter often referred to as "DEG") and an isophthalic acid (hereinafter often referred to as "IPA") as copolymerizable components in a total amount of not more than 1.5% by weight.

According to the present invention, further, there is provided a preform capable of forming a heat-resistant container, comprising the ethylene terephthalate type polyester resin for forming the heat-resistant container of the above second embodiment, and having an intrinsic viscosity in a range of 0.65 to 0.80 dL/g, a total content of an MHET and a BHET of less than buy weight, an acetaldehyde content of not more than 15 ppm, speak time of crystallisation of not longer than 60 seconds and the crystallization energy (ΔH) of not less than 20 J/g in the isothermal crystallization at 210 ˚C.

It is desired that the preform capable of forming the heat-resistant container contains a diethylene glycol and an isophthalic acid as copolymerizable components in a total amount of not more than 2.7% by weight.

According to the present invention, further, there is provided a process for producing an ethylene terephthalate type polyester resin by heat-treating an ethylene terephthalate type polyester resin, which obtained by the melt state polymerization, at a temperature of 160 to 220˚C for not less than 1 hour but less than 5 hours.

Effects of the Invention:

The ethylene terephthalate type polyester resin (hereinafter often referred to as "PET resin") of the present invention contains oligomer components such as cyclic trimer and monomer components that work as a binder for adhering high molecular components, but in which the MHET and the BHET that have particularly low melting points and are considered to cause adhesion are contained in decreased amounts. Therefore, the PET resin of the invention is free from the problems that occurred so far in forming the containers, i.e., free from such problems that the resin adheres on the surfaces of the conveyer metal molds at the time of compression forming hindering the formability, that the resin clogs in the air vent of the metal molds at the time of injection forming necessitating frequent cleaning operation, that the cyclic trimer and the resin adhere on the surfaces of the metal molds at the time of heat-setting causing a decrease in the transparency of the containers due to roughed surfaces, and that frequent cleaning of the metal molds is required.

Further, the pellets of the PET resin of the present invention have a crystallinity which is not so high as that of the polyester resin obtained through the solid state polymerization. Therefore, the rate of diffusion of acetaldehyde in the pellets does not become so slow, and the content of the acetaldehyde can be decreased within short periods of time even though a temperature is lower than necessary for the solid state polymerization. Besides, a end temperature of melting peak of the PET resin offered by this invention is lower than that of the PET resin obtained by the solid state polymerization, so a preform or a container which includes the small amount of the thermolysis products such as MHET, BHET, and acetaldehyde can be formed at a low temperature.

Moreover, the PET resin offered by this invention can be performed the heat-set efficiently and makes it possible to produce heat-resistant containers maintaining good productivity,

According to the process for producing the PET resin of the present invention, the polyester resin having the above-mentioned features can be productively and economically produced by using a general-purpose melt state polymerized polyester resin without the solid state polymerization.

In the PET resin for forming heat-resistant containers according to the second aspect of the invention, further, the peak time of crystallization is not longer than 360 seconds in the isothermal crystallization at 210˚C, which is obviously shorter than that of the polyester resin obtained through the solid state polymerization (e.g., Comparative Examples 15 to 17 appearing later). Additionally, the PET resin of the invention crystallization energy ($\Delta H$) of not less than 30 J/g permitting the mouth portion to be easily crystallized and the heat-setting to be efficiently conducted, that are necessary for forming heat-resistant containers making it possible to form the containers maintaining good productivity and economy. Here, a criterion of temperature for measuring a peak time of crystallization and an energy of crystallization is set at 210˚C. This is because the crystallization characteristics in this temperature range contribute to the crystallization time at the mouth portion of the preform.

Further, the PET resin for forming heat-resistant containers of the second aspect of the invention contains low molecular components having molecular weights of not larger than 10000 in an amount of not less than 8%. These components work as a crystal nucleating agent contributing to quicken the rate of crystallization and, therefore, to efficiently conduct the crystallization of the mouth portion and the heat-setting.

Namely, as will be obvious from Fig. 1 showing a relationship between the crystallization time and the reached crystallinity (xc) at the mouth portions of the preform formed by the PET resin of the invention (Example 8) and of the preform of formed by the polyester resin obtained through the solid state polymerization (Comparative Example 15), the crystallinity of the preform formed by of the polyester resin of the invention reaches up to 0.30 in only about 70 seconds whereas the polyester resin obtained through the solid state polymerization takes more than 90 seconds until the crystallinity reaches up to 0.30, indicating that the preform of the polyester resin of the present invention permits the mouth portion to be efficiently crystallized.

Further, the PET resin of the invention can be blended with polyester resins other than the PET resin of the invention to form a preform.

For example, the preform formed by using a mixture with the polyester resin obtained through the solid state polymerization (Example 13) or by using a mixture with the melt state polymerized polyester resin (Example 14) can exhibit properties similar to the preform formed by using the PET resin of the invention despite the polyester resin of the invention is container in only a small amount and, therefore, enables the polyester resin obtained through the solid state polymerisation to be efficiently and quickly crystallized.

Moreover, the PET resin of the invention contains the acetaldehyde in an amount of not more than 15 ppm. Therefore, the containers formed by using the PET resin of the invention excel in flavor-retaining property.

Mode for Carrying Out the Invention:

(Synthesis of polyester resins)

The PET resin of the present invention is a polyester resin that is heat-treated as will be described later after having been melt state polymerized, and has such features that the intrinsic viscosity lies in a range of 0.65 to 0.85 dL/g, the total content of the WHET and the BHET is less than 0.005% by weight and, in the case of the PET resin of the first aspect, has heat of fusion of not more than 50 J/g, a end temperature of melting peak of not higher than 270˚C and crystallinity of less than 0.48 and, in the case of the PET resin for forming heat-resistant containers of the second aspect, has an acetaldehyde content of 2 to 10 ppm, and satisfies at least either (i) a peak time of crystallization of not longer than 360 seconds and the crystallization energy ($\Delta H$) of not less than 30 J/g in the isothermal crystallization art 210˚C, or (ii) components having molecular weights of not larger than 10000 are contained in not less than 8%. In other respects, the PET resin of the invention can be used same as the conventional polyester resins, and the method of synthesis thereof is basically the same as the conventional method of synthesis.

That is, the polyester resin is obtained by melt state polymerizing a starting material comprising chiefly a terephthalic acid or an ester-forming derivative thereof and an ethylene glycol or an ester-forming derivative thereof in the presence of a catalyst.

The polyester resin is synthesize, usually, by a method of synthesizing a polyethylene terephthalate (PET) by directly reacting a highly pure terephthalic acid (TPA) and an ethylene glycol (EG). The method is, usually, divided into two steps, i.e., (A) the step of reacting the TPA with the EG to synthesize the BHET or a lowly polycondensed product thereof and (B) the step of conducting the polycondensation by removing the ethylene glycol from the BHET or the lowly polycondensed product thereof.

The BHET or the lowly polycondensed product thereof can be synthesized under known conditions by, for example, esterification using the EG in an amount of 1.1 to 1.5 mol times of the TPA by being heated at a temperature not lower than a boiling point of the EG, e.g., at 220 to 260˚C under a pressure of 1 to 5 kg/cm2 while removing water out of the system. In this case, the TPA itself serves as a catalyst and, therefor, no catalyst is, usually, required. However, a known esterifying catalyst may be used.

In the second step of polycondensation, a known polycondensation catalyst is added to the BHET or the lowly polycondensed product thereof obtained in the first step. Thereafter, the pressure is gradually lowered while maintaining the reaction system at the temperature that ranges from 260 to 290˚C and, finally, the reaction system is stirred under a reduced pressure of 1 to 3 mmHg to conduct the reaction while removing the formed EG out of the system. The molecular weight is detected depending on the viscosity of the reaction system and after a predetermined value is reached, the product is ejected out of the system and is cooled to obtain chips thereof. As the polycondensation catalyst, there is, usually, used a germanium compound such as germanium dioxide, a titanium compound such as tetraethyl titanate, or an antimony compound such as antimony trioxide. It is, however, desired to use the titanium compound or the antimony compound from the standpoint of efficient polycondensation reaction and economy.

The polyester resin of the invention chiefly comprises ethylene terephthalate units, i.e., is a polyester resin in which not less than 50 mol% of the ester recurring units comprise ethylene terephthalate units. Desirably, most of the ester recurring units and, usually, not less than 70 mol% and, specifically, not less than 80 mol% of the ester recurring units are occupied by the ethylene terephthalate units, and have a grass transition point (Tg) of 50 to 90˚C and, particularly, 55 to 80˚C and a melting point (Tm) of 200 to 270˚C and, particularly, 220 to 265˚C.

The copolymerized polyester containing small amounts of ester units other than the ethylene terephthalate units is suited from the standpoint of the crystallinity and the end temperature of melting peak. In particular, it is desired that the amount of the copolymerizable components is not less than 1.6% by weight but is less than 3.0% by weight. In the case of the polyester resin for forming heat-resistant containers having improved heat resistance in particular, it is important that the ester units other than the ethylene terephthalate units are contained in small amounts from the standpoint of being imparted with the above-mentioned crystallizing characteristics and molecular weight distribution. When the diethylene glycol and the isophthalic acid are contained as copolymerizable components, in particular, it is desired that the total amount thereof is not larger than 1.5% by weight.

As the other copolymerizable components, there can be exemplified, as dicarboxylic acid components, aromatic dicarboxylic acids such as phthalic acid and naphthalenedicarboxylic acid; alicyclic dicarboxylic acid such as cyclohexanedicarboxylic acid; and aliphatic dicarboxylic acids such as succinic acid, adipic acid, sebacic acid and dodecanedioic acid, which may be used in one kind or in a combination of two or more kinds. As the diol component, there can be exemplified propylene glycol, 1, 4-butanediol, 1, 6-hexane glycol, cyclohexane dimethanol, and ethylene oxide adduct of bisphenol A, which may be used in one kind or in two or more kinds.

The heat treatment for crystallizing the pelletized polyester resin after the melt state polymerization can be conducted by a method based on a fluidized bed or a fixed bed by using a heated inert gas such as heated nitrogen gas or by a method in a vacuum heated furnace. Preferably, the heat treatment is conducted at a crystallization temperature in a range of 130 to 165˚C, particularly, 140 to 160˚C and, particularly, 140 to 150˚C for 130 to 200 minutes and, particularly, 150 to 180 minutes. Or the crystallization can be conducted by using the latent heat of when the molten polyester resin is pelletized.

In the present invention, the crystallized pellets of the polyester resin are heat-treated in vacuum or in an inert gas atmosphere at a temperature of 160 to 220˚C and, from the standpoint of improving the heat resistance, at 170 to 200 ˚C and, particularly, at 180 to 200˚C for not less than 1 hour but less than 5 hours and, particularly, 3 to 4 hour. If the heating temperature is lower than the above range, the amounts of the MHET and BHET cannot be decreased to a sufficient degree. If the heating temperature is higher than the above range, the resin is gelled and the crystallinity of the resin pellets will become so high as to deteriorate the melting property. Further, even if the heating is conducted for more than 5 hours, the contents of the MHET and BHET cannot be decreased more effectively but rather the productivity decreases due to the treatment conducted for extended periods of time (see Examples 1 and 2, Comparative Examples 3 and 4).

Like the step of crystallizing the polyester resin pellets described above, the heat treatment can be conducted based on the fluidized bed or the fixed bed by using the heated inert gas such as the heated nitrogen gas, or can be conducted in a vacuum heating surface. When the heated inert gas is used, it is desired that the oxygen concentration in the heating vessel is maintained to be not higher than 15% to prevent the pellets from developing yellow color.

The heat treatment makes it possible to decrease the contents of the MHET and BHET that become a cause of adhesion on the surfaces of the metal molds to be less than 0.005% by weight and, particularly, to be not more than 0.004% by weight, as well as to decrease the contents of the oligomers such as cyclic trimer, etc. and the low molecular components such as acetaldehyde, etc. that become a cause of deteriorating the flavor-retaining property.

In the process for producing the PET resin of the present invention, the heat treatment does not almost cause an increase in the intrinsic viscosity unlike the solid state polymerization. As a result, the polyester resin of the invention has an intrinsic viscosity in a range of 0.65 to 0.85 dL/g, particularly, 0.65 to 0.80 dL/g and, particularly, 0.66 to 0.75 dL/g. If the intrinsic viscosity is lower than the above range, the obtained containers develop such problems as insufficient mechanical strength or shock resistance, or the molten resin tends to be drawn down during the compression forming. If the intrinsic viscosity is higher than the above range, on the other hand, the molten resin exhibits deteriorated extrusion property, decreased formability, and may be scratched by cutter marks in the compression forming. Besides, due to its high melt viscosity and susceptibility to shearing by screws, it becomes difficult to suppress the acetaldehyde content in the container and deterioration of the resin caused by the melt forming to be smaller than the desired values.

Further, the PET resin of the first aspect of the invention has the heat of fusion of not more than 50 J/g, the end temperature of melting peak of not higher than 270°C and the degree of crystallinity of less than 0.48, and makes it possible to form a container at a low temperature and, therefore, to form a preform without increasing the amounts of the MHET and BHET.

Further, the PET resin of the second aspect of the invention has the peak time of crystallization of not longer than 360 seconds and the energy of crystallization ($\Delta$H) of not less than 30 J/g in the isothermal crystallization at 210°C, or contains not less than 8% of components having molecular weights of not larger than 10000, making it possible to crystallize the mouth portion at the time of forming the preform, to conduct the heat-setting at a low temperature in a short period of time at the time of forming the heat-resistant container and, therefore, to economically form the preform maintaining good productivity.

(Preforms)

The preform of the present invention can be formed by a conventional compression-forming or injection-forming method but using the above-mentioned polyester resin. The preform comprising the PET resin of the first aspect has such features as the total content of the MHET and the BHET is not more than 0.010% by weight, the acetaldehyde content is not more than 15 ppm, and a change in the intrinsic viscosity when forming preform is within 3%.

Further, the preform formed by using the PET resin of the second aspect of the invention has a crystallized mouth portion, and has such features as the intrinsic viscosity is in a range of 0.65 to 0.80 dL/g, the total content of the MHET and the BHET is less than 0.010% by weight, the acetaldehyde content is not more than 15 ppm, and the peak time of crystallization is not longer than 60 seconds and the crystallization energy ($\Delta$H) is not less than 20 J/g in the isothermal crystallization at 210 °C.

That is, as described above, the PET resin of the first aspect of the invention has a relatively low end temperature of melting peak and makes it possible to form the preform at a low temperature without increasing the amounts of the MHET and BHET.

Further, the PET resin of the invention used for forming the preform has small acetaldehyde content since it has been subjected to the heat treatment. Owing to the formation at a low temperature, further, the generation of acetaldehyde under molding is suppressed, Accordingly, the content of acetaldehyde in the preform of the invention is not more than 15 ppm, so a container having excellent flavor-retaining property can be provided.

As described above, further, the PET resin of the first aspect of the invention has an intrinsic viscosity in the range of 0.65 to 0.85 dL/g. However, a decrease in the intrinsic viscosity after forming the preform is maintained within 3% with respect to the intrinsic viscosity of the resin used.

Generally, when the preform is formed by the compression forming or the injection forming, the intrinsic viscosity decreases as the resin is melted and kneaded. In the case of the preform comprising the PET resin of the invention, however, a decrease in the intrinsic viscosity from that of the PET resin pellets used is suppressed to be not more than 3%, manifesting excellent formability.

As described above, further, the preform of the present invention can be formed by using a mixture composed of the PET resin offered by the invention and other polyester resigns.

As the polyester resin that can be used by mixing it with the PET resin of the invention, there can be used the one having an intrinsic viscosity of not less than 0.80 dL/g from the standpoint of adjusting the rate of crystallization and, specifically, a polyester resin obtained through the solid state polymerization or a polyester resin obtained by melt state polymerization and is subjected to the heat treatment.

Although the ratio of mixing varies depending upon the polyester resin that is to be blended and cannot be definitely specified, it is desired that the total amount of the diethylene glycol and the isophthalic acid contained as copolymerizable components in the mixture is not more than 2.7% by weight.

To form the preform by the compression forming, a melt of the polyester resin of the invention for compression forming is continuously extruded by an extruder, and is cut by cutting means (cutter) of a synthetic resin feeding device to produce molten resin masses (drops) which are precursors for forming preforms. Thereafter, the molten resin masses are held by holding means (holders), thrown via guide means (throat) into cavity molds of a compression-forming machine, are compression-formed by using core molds, and are cooled and solidified to form the preforms.

When the preforms are formed by the injection forming, further, there is no particular limitation on the conditions for injection. Usually, however, the preforms having bottom are formed at an injection temperature of 260 to 300°C under an injection pressure of 30 to 60 kg/cm2.

In producing the preforms, it is desired that the molten polyester resin is melt-extruded at a temperature in a range of Tm + 5°C to Tm + 40°C and, particularly, Tm + 10°C to Tm + 30°C with the melting point (Tm) of the polyester resin as a reference from the standpoint of forming a homogeneously melt-extruded resin and preventing the thermal deterioration or draw-down of the resin.

In kneading the molten resin by the extruder, further, it is particularly desired to also conduct the venting. This makes it possible to suppress the formation of the MHET, BHET, cyclic trimer or components of high molecular weights of not higher than a degree of inter-tangling point polymerization, to effectively suppress the adhesion of the melt-extruded resin and effectively prevent the resin from adhering onto the conveyer means or onto the air vents of the metal molds. As described above, further, the polyester resin offered by this invention crystallizes in a short time. When the heat-resistant containers are to be formed, therefore, the mouth portions of the preforms can be efficiently conducted.

Upon being stretch-blow-formed, the preforms of the present invention are formed into stretch-formed containers such as bottles, wide-mouth cups and the like.

In conducting the stretch-blow forming, the preform formed by using the polyester resin of the invention is heated at a stretching temperature, is stretched in the axial direction, and is biaxially stretch-blow formed in the circumferential direction to produce a biaxially stretched container.

The forming of preform and the stretch-blow forming thereof can also be applied to the cold parison system as well as to the hot parison system which conducts the stretch-blow forming without completely cooling the preform.

Prior to the stretch-blow forming, the preform is, as required, pre-heated to a temperature suited for the stretching by such means as infrared ray heater or high frequency induction heating. The temperature range in the case of the polyester is 85 to 120°C and, specifically, 95 to 110°C,

The preform is fed into a known stretch-blow-forming machine, set into a metal mold, stretched in the axial direction by pushing a stretching rod therein, and is stretch-formed in the circumferential direction by blowing a fluid therein. It is desired that the temperature of the metal mold is, usually, in a range of room temperature to 230°C. When the heat-setting is to be conducted by a one-mold method as will be described below, specifically, it is desired that the temperature of the metal mold is set to be 120 to 180°C.

The stretching ratio of the finally obtained polyester container is suitably 1.5 to 25 times in terms of the area ratio, and in which it is desired that the stretching ratio in the axial direction is 1.2 to 6 times and the stretching ratio in the circumferential direction is 1.2 to 4.5 times.

In the PET resin of the present invention, the total amount of the MHET and BHET has been decreased to be less than 0.005% by weight effectively preventing a decrease in the transparency of the container surface due to form surfaces roughened by the adhesion of the cyclic trimer or the resin at the time of heat-setting and avoiding the need of frequent cleaning of the metal molds. Therefore, the heat-setting can be conducted maintaining good productivity.

The heat-setting can be conducted by well known means, for example, a one-mold method in the blow-forming metal mold or a two-mold method in a metal mold for heat-setting separate from the blow-forming metal mold. The temperature of the heat-setting is suitably in a range of 120 to 230°C.

EXAMPLES

The invention will now be described by way of Examples to which only, however, the invention is in no way limited. Values of properties used in Example were evaluated and measured according to the methods described below.

1. Measurements.

(1) Intrinsic viscosity (IV).

Pellets and preforms dried at 150°C for 4 hours were each weighed in an amount of 0.3 g and they were completely dissolved in a mixed solvent of 1, 1, 2, 2-tetrachloroethane and phenol (weight ratio of 1/1) at 120°C for 20 minutes with stirring after adjusting a concentration to 1.00 g/dl. The solutions in which they have been dissolved were cooled down to room temperature, and were measured for their relative viscosities by using a relative viscometer (Viscotek, T501) set a temperature to 30 °C.

(2) Contents of the MHET, BHET and cyclic trimer.

PET resin pellets and preforms weighed in an amount of 0.5 g were completely dissolved in a mixed solvent of hexafluoroisopropanol/chloroform (weight ratio of 1/1). Then, 20 ml of chloroform and, thereafter, 300 ml of tetrahydrofuran were gradually added to the solutions prepared above. The mixtures were left for 4 hours to precipitate PET polymer. The suspensions were filtered through a filtering paper, and the filtrates were concentrated by using an evaporator until just before they were dry-solidified. The concentrated solutions were left overnight after 5 ml of dimethylformamide (DMF) was added. Thereafter, the DMF was added again to each solutions moved to measuring flasks, and the solutions each in 10 ml was left again overnight. The solutions were filtered by using a membrane filter with a pore diameter of 0.45 $\mu$m, and the filtrates were measured by using a high-performance liquid chromatography. At the same time, the standard solution of the cyclic trimmer, too, was measured, and the total contents of the MHET and BHET in the pellets and in the preforms were calculated relying on the obtained calibration curve.

(3) Content of the acetaldehyde (AA).

PET resin pellets and the preform pulverized by using a freeze-pulverizing device were each weighed in an amount of 1.0 g and were put into glass bottles and were sealed after adding 5.0 ml of pure water thereto. The suspensions were heated in an oven adjusted to a temperature of 120°C for 60 minutes, and were cooled in the iced water. The supernatant solutions of the suspensions were each picked up in an amount of 3.0 ml, and 0.6 ml of a 2, 4-dinitrophenylhydrazinephosphoric acid solution of a concentration of 0,1% was added thereto, and the mixtures were left to stand for 30 minutes. The supernatant solutions after left to stand were filtered through a membrane filter having a pore diameter of 0.45 $\mu$m, and the filtrates were measured by using a high-performance liquid chromatography. At the same time, the standard solution of the acetaldehyde (Acetaldehyde-DNPH, manufactured by Sigma Aldrich Japan Co.), too, was measured, and the acetaldehyde contents in the pellets and in the preform were calculated relying on the obtained calibration curve.

(4) Crystallinity of the PET resin pellets and of the mouth portion of the preform.

The densities were measured by using a calcium nitrate solution-type density-gradient tube (manufactured by Ikeda Rika Co.) under a condition of 20°C
The crystallinity was calculated by the densitometry expressed according to following formula. A crystallized neck ring part of the mouth portion of the perform which was cut out in a square of 4 mm was used for measuring its density. After the measurement, the crystallinity was calculated by following formula.

$$\text{Crystallinity}$$
$$\chi c = \{[\rho c \times (\rho - \rho a)]/[\rho \times (\rho c - \rho a)]\}$$

$\rho$: measured density (g/cm3)
$\rho$a: amorphous density (1.335 g/cm3)
$\rho$c: crystal density (1.455 g/cm3)

(5) Differential scanning calorimetry (DSC).

(5-1) The PET resin pellets were measured for their heat of fusion ($\Delta$HTm) and the end temperature of melting peak (Tmend) by using a differential scanning calorimeter (Diamond DSC manufactured by Perkin-Elmer Co.). The PET resin pellets were weighed each in an amount of 8 mg to use as samples.

The measuring conditions were as follows:

(I) Maintained at 25°C for 3 minutes.
(II) Temperature was elevated from 25°C to 290°C at a rate of 10°C/min.
(III) $\Delta$HTm was found from the peak area of fusion in II, and the temperature on the highest side constituting the peak of fusion was regarded to be Tmend.

(5-2) The PET resin pellets and the preform were measured for their peak time of crystallization and crystallization energy at 210˚C by using the differential scanning calorimeter (Diamond DSC, manufactured by Perkin-Elmer Co.). The PET resin pellets and the preform were weighed each in an amount of 8 mg to use as samples.

[PET resin pellets]

(I) Maintained at 20˚C for 3 minutes.
(II) Temperature was elevated from 20˚C to 290˚C at a rate of 300˚C/min.
(III) Maintained at 290˚C for 3 minutes.
(IV) Temperature was lowered from 290˚C down to 210˚C at a rate of 300˚C/min.
(V) Maintained at 210˚C for 30 minutes.

[Preform]

(I) Maintained at 20˚C for 3 minutes.
(II) Temperature was elevated from 20˚C to 210˚C at a rate of 300˚C/min.
(III) Maintained at 210˚C for 3 minutes.

The peak times of crystallization were determined from the isothermal crystallization curve in the scanning of (V) for the PET resin pellets and in the scanning of (III) for the preform, and the crystallization energies were found from the peak areas.

(6) Measurement of the contents of the copolymerizable components.

The PET resin pellets and preform dried at 150˚C for 4 hours were dissolved in a mixed solvent of deuterotrifluoroacetic /deuterochloroform at a weight ratio of 50:50, and each solution was measured for their $^1$H-NMR spectra by using an NMR apparatus (EX270, manufactured by Nihon Denshi Datum Co.). Thereafter, the contents of diethylene glycol (DEG) and isophthalic acid (IPA) were calculated from the ratios of integrated values of proton peaks stemming from DEG part, IPA part and terephthalic acid part. Because these contents were not changed by the heat treatment or the formation of the preform, when a mixture of PET resin pellets was used as a sample, the content was found by the weighted average.

(7) Measurement of the contents of the components having molecular weights of not more than 10000.

5 Milligrams of a PET resin piece was completely dissolved in 5 ml of a mixed solvent of 1, 1, 1, 3, 3, 3-hexafluoro-2-isopropanol and chloroform at a weight ratio of 50:50. Thereafter, an integral curve of molecular weight distribution was found by using a gel permeation chromatography (GPC: Integrated System For GPC/SEC, manufactured by Asahi Techneion Co., Triple Detector Module TriSEC, Model 302, manufactured by Viscotek Co.) equipped with a light-scattering photometer as a detector, a differential refractometer and a differential pressure viscosity detector, and the content of components having molecular weights of not more than 10000 was calculated.

(8) Evaluation of fouling on the surfaces of the heat-resistant blow metal mold (heat-settesting).

A preform of which the mouth portion has been crystallized by a method described bellow was biaxially stretch-blow formed by the one-step blow-forming method and, then, the heat-setting was conducted under the conditions of 150˚C for 2 seconds to produce a heat-resistant PET bottle. After the formation of the bottle was repeated 5000 times, the surface of the heat-resistant blow metal mold was observed, and was evaluated to be "○" when it could be further used and to be "X" when the surface was considerably fouled and could not be used any more.

2. Polymerization of the melt-polymerized PET resin.

(2-1) 13 Kilograms of a total of highly pure terephthalic acid and isophthalic acid, 4.93 kg of ethylene glycol and 6.88 g of an aqueous solution containing 20% of tetraethylammonium hydroxide were fed into an autoclave and were reached under a nitrogen atmosphere of a pressure of 1.7 kg/cm2 and 260˚C for 6 hours with stirring while water formed by the reaction was removed out of the system. Next, 252 g of antimony acetate was added to the reaction system, and the mixture was stirred for 20 minutes. Thereafter, 1.26 g of 85% phosphoric acid was added thereto. The mixture was reacted for a predetermined period of time under the condition of 280 ˚C and 2 torr and, then, ethylene glycol was removed out of system. After the reaction has been finished, the reaction product was extracted in a stranded manner from the reactor, cooled with water, and was pelletized by using a pelletizer. The amounts of feeding the highly pure terephthalic acid and isophthalic acid, and the reaction times were as shown in Table 1.

| Table 1 | | | | | | |
|---|---|---|---|---|---|---|
| | | Intrinsic viscosity | Copolymerzable component | Terephthalic acid | Isophthalic acid | Reaction time |
| | | dL/g | wt% | kg | kg | min |
| | Ex. 1 | 0.74 | 2.0 | 12.83 | 0.17 | 70 |
| | Ex. 2 | 0.74 | 2.0 | 12.83 | 0.17 | 70 |
| | Ex. 3 | 0.74 | 2.0 | 12.83 | 0.17 | 70 |
| | Ex. 4 | 0.74 | 2.0 | 12.83 | 0.17 | 70 |
| | Ex. 5 | 0.74 | 2.0 | 12.83 | 0,17 | 70 |
| | Ex. 6 | 0.84 | 2.6 | 12.70 | 0.30 | 140 |
| | Ex. 7 | 0.66 | 2.9 | 12.65 | 0.35 | 50 |
| | Comp. Ex. 1. | 0.74 | 2,0 | 12.83 | 0.17 | 70 |
| | Comp. Ex. 2 | 0.74 | 2.0 | 12.83 | 0.17 | 70 |
| | Comp. Ex. 3 | 0,74 | 2.0 | 12.83 | 0.17 | 70 |
| | Comp. Ex. 4 | 0.74 | 2.0 | 12.83 | 0.17 | 70 |
| | Comp. Ex. 5 | 0.74 | 2.0 | 12.83 | 0.17 | 70 |
| | Comp. Ex. 6 | 0.88 | 2.6 | 12.70 | 0.30 | 170 |
| | Comp. Ex. 7 | 0,62 | 2.9 | 12,65 | 0.35 | 45 |
| | Comp. Ex. 8 | 0.74 | - | - | - | - |
| | Copolymerizable component: Total amount of isophthalic acid (IPA) and diethylene glycol (DEG). | | | | | |

(2-2) 13 Kilograms of a total of highly pure terephthalic acid and isophthalic acid, 4.93 kg of ethylene glycol and 6.88 g of an aqueous solution containing 20% of tetraethylammonium hydroxide were fed into an autoclave and were reacted under in a nitrogen atmosphere of a pressure of 1. 7 kg/cm2 and 260˚C for 6 hours with stirring while water formed by the reaction was removed out of the system. Next, 201 g of tetra-n-butyl titanate was added to the reaction system, and the mixture was stirred for 20 minutes. Thereafter, 1.26 g of 85% phosphoric acid was added thereto. The mixture was reacted for a predetermined period of time under the condition of 280 ˚C and 2 torr and, then, ethylene glycol was removed out of system. After the reaction has been finished, the reaction product was extracted in a stranded manner from the reactor, cooled with water, and was pelletized by using a pelletizer. The amounts of feeding the highly pure terephthalic acid and isophthalic acid, and the reaction times were as shown in Table 2.

| Table 2 | | | | | | |
|---|---|---|---|---|---|---|
| | | visccosity | Intrinsic Total content of DEG and IPA | Terephthalic acid | Isophthalic acid | Reaction time |
| | | dL/g | wt% | kg | kg | min |
| | | | | | | |
| Ex. 8 | MSP | 0.68 | 1.3 | 13.00 | 0.00 | 60 |
| Ex. 9 | MSP | 0.68 | 1.3 | 13.00 | 0.00 | 60 |
| Ex. 10 | MSP | 0.68 | 1.3 | 13.00 | 0.00 | 60 |
| Ex. 1.1 | MSP | 0.79 | 1.0 | 13.00 | 0.00 | 90 |
| Ex. 12 | MSP | 0.79 | 1.0 | 13.00 | 0.00 | 90 |
| Comp. Ex. 9 | MSP | 0.68 | 1.3 | 13.00 | 0.00 | 60 |
| Comp. Ex. 10 | MSP | 0.68 | 1.3 | 13.00 | 0.00 | 60 |
| Comp. Ex. 11 | MSP | 0.74 | 1.7 | 12.83 | 0.17 | 70 |
| Comp. Ex. 12 | MSP | 0.64 | 2.5 | 12.73 | 0.27 | 50 |
| Comp. Ex. 13 | MSP | 0.76 | 2.4 | 1.2.73 | 0.27 | 75 |
| Comp.Ex. 14 | MSP | 0.86 | 3.0 | 12.73 | 0.27 | 150 |
| Comp. Ex. 15 | SSP | 0.73 | 1.2 | - | | - |
| Comp. Ex. 16 | SSP | 0.82 | 2.8 | - | - | - |
| Comp. Ex. 17 | SSP | 0.70 | 1.7 | - | - | - |

3. Heat treatment of the PET resin pellets by the nitrogen flow method (crystallization treatment and treatment for decreasing the MHET and SHET).

15 Kilograms of melt-polymerized PET resin pellets in an amorphous state were dried under reduced pressure (in 4 mmHg at 80°C for 12 hours) by using a stirrer type vacuum drier (45MV manufactured by Dalton Co.). The stirrer was revolved at 20 rpm. The PET resin pellets were subjected to the crystallization treatment (in 4 mmHg at 150°C for 3 hours) and, thereafter, the gas introduction valve and leak valve equipped with the drier were opened. Next, the PET resin pellets were subjected to the treatment for decreasing the MHET and BHET under predetermined conditions with nitrogen flow. The nitrogen gas was dried by being passed through the silica gel and, thereafter, was heated up to the same temperature as that of the treatment for decreasing the MHET and BHET. A flow rate of nitrogen gas was adjusted to 10 L/min.

4. Heat treatment of the PET resin pellets by the reduced pressure method (crystallization treatment and treatment for decreasing the MHET and BHET).

15 Kilograms of melt-polymerized PET resin pellets were dried under reduced pressure (in 4 mmHg at 80°C for 12 hours) by using the stirrer type vacuum drier (45MV manufactured by Dalton Co.). The stirred was revolved at 20 rpm. The PET resin pellets were subjected to the crystallization treatment (in 4 mmHg at 150°C for 3 hours) and were, thereafter, subjected to the treatment for decreasing the MHET and BHET under predetermined conditions of reduced pressure (in 4 mmHg).

5. Forming the preforms.

Preforms were formed from the heat-treated PET resin pellet by an injection-forming machine. Further, the solid state polymerized PET resin was dried at 150°C for 4 hours instead of being heat-treated, and was fed to the injection-forming machine to form preforms.
In Examples 1 to 7 and in Comparative Examples 1 to 8, the barrel temperature of the injection-forming machine and the hot runner temperature were set at 270°C. In Examples 8 to 14 and in Comparative Examples 9 to 17, the barrel temperature of the injection-forming machine and the hot runner temperature were set at 290˚C. The metal mold temperature and forming cycle were set at 15 ˚C and 25 seconds, respectively. Under above-mentioned conditions, preforms for 500-ml bottles with a weight of 28 g were formed.

6. Crystallizing the mouth portions.

The mouth portions were crystallized by setting the output of the infrared ray heater equipped with the mouth portion-crystallizing device to be 1200 W. The heating time was 2 minutes in Examples 1 to 7 and in Comparative Examples 1 to 8, and was varied from 20 seconds to 160 seconds in a unit of 10 seconds in Examples 8 to 14 and in Comparative Examples 9 to 17. Then, the preforms after heated were quickly cooled in water of room temperature contained in a bucket.

(Example 1)

Melt state polymerized PET resin pellets in an amorphous state having an intrinsic viscosity of 0.74 dL/g and a total content of the MHET and BHET of 0.0090% by weight were treated to be crystallized and were, thereafter, treated by the nitrogen flow method under a condition of 180˚C for 3 hours to decrease the amounts of the MHET and BHET. After the heat treatment, the pellets were measured for their intrinsic viscosity, total content of the MHET and BHET, heat of fusion, end temperature of melting peak and crystallinity. A preform was prepared from the heat-treated PET resin pellets and was measured for a total content of the MHET and BHET contained in the preform, a content of AA and a reduction ratio of IV. Further, the preform that was prepared was subjected to the heat-set testing to evaluate the fouling on the surfaces of the metal mold with the eye.

(Example 2)

The pellets were heat-treated and a preform was prepared in the same manner as in Example 1 but conducting the treatment for decreasing the amounts of the MHET and BHET for 4 hours. The pellets and the preform were variously measured and were, thereafter, subjected to the heat-set testing to evaluate the fouling on the surfaces of the metal mold with the eye.

(Example 3)

The pellets were heat-treated and a preform was prepared in the same manner as in Example 1 but conducting the heat treatment under a reduced pressure and conducting the treatment for decreasing the amounts of the MHET and BHET for 4 hours. The pellets and the preform were variously measured and were, thereafter, subjected to the heat-set testing to evaluate the fouling on the surfaces of the metal mold with the eye.

(Example 4)

The pellets were heat-treated and a preform was prepared in the same manner as in Example 1 but conducting the heat treatment under a reduced pressure and conducting the treatment for decreasing the amounts of the MHET and BHET at a temperature of 170˚C for 4 hours. The pellets and the preform were variously measured and were, thereafter, subjected to the heat-set testing to evaluate the fouling on the surfaces of the metal mold with the eye.

(Example 5)

The pellets were heat-treated and a preform was prepared in the same manner as in Example 1 but so controlling the elevation of temperature in the treatment for decreasing the amounts of the MHET and BHET from 160˚C to 220˚C in 4 hours. The pellets and the preform were variously measured and were, thereafter, subjected to the heat-set testing to evaluate the fouling on the surfaces of the metal mold with the eye.

(Example 6)

The pellets were heat-treated and a preform was prepared in the same manner as in Example 1 but using melt-polymerized PET resin pellets in an amorphous state having an intrinsic viscosity of 0.84 dL/g and a total content of the WHET and BHET of 0.0052% by weight and conducting the treatment for decreasing the amounts of the MHET and BHET for 1 hour. The pellets and the preform were variously measured and were, thereafter, subjected to the heat-set testing to evaluate the fouling on the surfaces of the metal mold with the eye.

(Example 7)

The pellets were heat-treated and a preform was prepared in the same manner as in Example 1 but using melt-polymerized PET resin pellets in an amorphous state having an intrinsic viscosity of 0.66 dL/g and a total content of the MHET and BHET of 0.0098% by weight and conducting the treatment for decreasing the amounts of the MHET and BHET at a temperature of 190˚C for 4 hours. The pellets and the preform were variously measured and were, thereafter, subjected to the heat-set testing to evaluate the fouling on the surfaces of the metal mold with the eye.

(Comparative Example 1)

The pellets were heat-treated and a preform was prepared in the same manner as in Example 1 but without conducting the treatment for decreasing the amounts of the MHET and BHET. The pellets and the preform were variously measured and were, thereafter, subjected to the heat-set testing to evaluate the fouling on the surfaces of the metal mold with the eye.

(Comparative Example 2)

The pellets were heat-treated and a preform was prepared in the same manner as in Example 1 but conducting the treatment for decreasing the amounts of the MHET and BHET at a temperature of 155˚C for 4 hours. The pellets and the preform were variously measured and were, thereafter, subjected to the heat-set testing to evaluate the fouling on the surfaces of the metal mold with the eye.

(Comparative Example 3)

The pellets were heat-treated and a preform was prepared in the same manner as in Example 1 but conducting the treatment for decreasing the amounts of the MHET and WHET for 5 hours. The pellets and the preform were variously measured and were, thereafter, subjected to the heat-set testing to evaluate the fouling on the surfaces of the metal mold with the eye.

(Comparative Example 4)

The pellets were heat-treated and a preform was prepared in the same manner as in Example 1 but conducting the treatment for decreasing the amounts of the MHET and BHET for 7 hours. The pellets and the preform were variously measured and were, thereafter, subjected to the heat-set testing to evaluate the fouling on the surfaces of the metal mold with the eye.

(Comparative Example 5)

The pellets were heat-treated and a preform was prepared in the same manner as in Example 1 but conducting the treatment for decreasing the amounts of the MHET and BHET at a temperature of 225˚C for 4 hours. The pellets and the preform were variously measured and were, thereafter, subjected to the heat-set testing to evaluate the fouling on the surfaces of the metal mold with the eye.

(Comparative Example 6)

The pellets were heat-treated and a preform was prepared in the same manner as in Example is but using melt-polymerized PET resin pellets in an amorphous state having an intrinsic viscosity of 0.88 dL/g and a total content of the MHET and BHET of 0,0052% by weight and conducting the treatment for decreasing the amounts of the MHET and BHET at a temperature of 200˚C. The pellets and the preform were variously measured and were, thereafter, subjected to the heat-set testing to evaluate the fouling on the surfaces of the metal mold with the eye.

(Comparative Example 7)

The pellets were heat-treated and a preform was prepared in the same manner as in Example 1 but using melt-polymerized PET resin pellets in an amorphous state having an intrinsic viscosity of 0. 62 dL/g and a total content of the MHET and BHET of 0.0160% by weight and conducting the treatment for decreasing the amounts of the MHET and BHET for 4 hours. The pellets and the preform were variously measured and were, thereafter, subjected to the heat-set testing to evaluate the fouling on the surfaces of the metal mold with the eye.

(Comparative Example 8)

By using solid state polymerized PET resin pellets having an intrinsic viscosity of 0.74 dL/g and a total contents of the MHET and BHET of 0.0041% by weight (RT543CTHP, manufactured by Toyo Boseki Co.), a preform was prepared in the same manner as in Example 1 but without heat-treating the pellets but drying the pellets at 150˚C for 4 hours. The pellets and the preform were variously measured and were, thereafter, subjected to the heat-set testing to evaluate the fouling on the surfaces of the metal mold with the eye.

The results of the above Examples and Comparative Examples were as shown in Table 3.

EP 2 371 874 A1

| Table 3 | | Pellets before treated | | | Treatment for decreasing BHET and MHET | | | | |
|---|---|---|---|---|---|---|---|---|---|
| | | Intrinsic viscosity | MHET+ BHET | | Temp. | Time | Treating method | | |
| | | dL/g | wt% | | °C | h | | | |
| | Ex. 1 | 0.74 | 0.0090 | | 180 | 3 | (1) | | |
| | Ex. 2 | 0.74 | 0.0090 | | 180 | 4 | (1) | | |
| | Ex. 3 | 0.74 | 0.0090 | | 180 | 4 | (2) | | |
| | Ex. 4 | 0.74 | 0.0090 | | 170 | 4 | (2) | | |
| | Ex. 5 | 0.74 | 0.0090 | | 160→220 | 4 | (1) | | |
| | Ex. 6 | 0.84 | 0.0052 | | 180 | 1 | (1) | | |
| | Ex. 7 | 0.66 | 0.0098 | | 190 | 4 | (1) | | |
| | Comp. Ex. 1 | 0.74 | 0.0090 | | -- | -- | -- | | |
| | Comp. Ex. 2 | 0.74 | 0.0090 | | 155 | 4 | (1) | | |
| | Comp. Ex. 3 | 0.74 | 0.0090 | | 180 | 5 | (1) | | |
| | Comp. Ex. 4 | 0.74 | 0.0090 | | 180 | 7 | (1) | | |
| | Comp. Ex. 5 | 0.74 | 0.0090 | | 225 | 4 | (1) | | |
| | Comp. Ex. 6 | 0.88 | 0.0052 | | 200 | 3 | (1) | | |
| | Comp. Ex. 7 | 0.62 | 0.0160 | | 180 | 4 | (1) | | |
| | Comp. Ex. 8 | 0.74 | 0.0041 | | -- | -- | -- | | |

* Comparative Example 1 shows properties of the pellets after the crystallization treatment and Comparative Example 8 shows properties of the untreated pellets.

(1): nitrogen flow
(2): reduced pressure

| | Table 3 (continued) | | | | | | | | |
|---|---|---|---|---|---|---|---|---|---|
| | Pellets after heat-treated | | | | | Formed article | | | |
| | Intrinsic viscosity | MHET +BHET | Heat of fusion | End temp. of melting peak | (3) | MHET +BHET | AA | Change in IV | Heat-set |
| | dL/g | wt% | J/g | °C | | wt% | ppm | % | |
| Ex. 1 | 0.75 | 0.0049 | 42.1 | 262 | 0.46 | 0.0059 | 12 | 1.8 | ○ |
| Ex. 2 | 0.75 | 0.0039 | 42.9 | 263 | 0.47 | 0.0063 | 9 | 2.3 | ○ |
| Ex. 3 | 0.76 | 0.0037 | 43.1 | 263 | 0.47 | 0.0063 | 9 | 2.3 | ○ |
| Ex. 4 | 0.75 | 0.0047 | 41.1 | 262 | 0.45 | 0.0061 | 8 | 1.6 | ○ |
| Ex. 5 | 0.76 | 0.0039 | 43.2 | 263 | 0.47 | 0.0069 | 7 | 2.5 | ○ |
| Ex. 6 | 0.84 | 0.0045 | 37.6 | 254 | 0.42 | 0.0051 | 14 | 1.4 | ○ |
| Ex. 7 | 0.67 | 0.0042 | 42.7 | 263 | 0.47 | 0.0066 | 12 | 1.6 | ○ |
| Comp. Ex. 1 | 0.74 | 0.0090 | 35.2 | 261 | 0.40 | 0.0120 | 25 | 1.3 | × |
| Comp. Ex. 2 | 0.74 | 0.0075 | 35.7 | 262 | 0.40 | 0.0110 | 23 | 1.3 | × |
| Comp. Ex. 3 | 0.74 | 0.0038 | 45.1 | 265 | 0.49 | 0.0069 | 16 | 2.6 | ○ |
| Comp. Ex. 4 | 0.75 | 0.0037 | 45.8 | 267 | 0.50 | 0.0071 | 18 | 2.7 | ○ |
| Comp. Ex. 5 | 0.78 | 0.0043 | 46.7 | 271 | 0.53 | 0.0071 | 18 | 2.9 | ○ |
| Comp. Ex. 6 | 0.89 | 0.0020 | 38.6 | 258 | 0.58 | 0.0047 | 17 | 1.8 | ○ |
| Comp. Ex. 7 | 0.63 | 0.0110 | 48.1 | 266 | 0.59 | 0.0130 | 21 | 1.9 | × |
| Comp. Ex. 8 | 0.74 | 0.0041 | 57.9 | 268 | 0.67 | 0.0098 | 8 | 3.6 | ○ |

* Comparative Example 1 shows properties of the pellets after the crystallization treatment and Comparative Example 8 shows properties of the untreated pellets.

(3): Crystallinity

(Example 8)

Melt state polymerized PET resin pellets in an amorphous state having an intrinsic viscosity of 0.68 dL/g, a total content of the MHET and BHET of 0.0101% by weight, an acetaldehyde concentration of 44.3 ppm and a content of a copolymerizable component of DEG of 1.3% by weight were treated to be crystallized and were, thereafter, treated under a condition of 170˚C for 4 hours to decrease the amounts of the MHET and BHET. After the heat treatment, the pellets were measured for their intrinsic viscosity, peak time of isothermal crystallization at 210˚C, energy of isothermal crystallization, total content of the MHET and BHET, content of the acetaldehyde, and content of the components having molecular weights of not more than 10000. A preform was prepared from the heat-treated PET resin pellets and was measured for its intrinsic viscosity, peak time of isothermal crystallization at 210˚C, energy of isothermal crystallization, a total content of the MHET and BHET, and a content of the acetaldehyde. Further, the mouth portion of the preform was crystallized to find the time until the crystallinity ($\chi$c) exceeded 0.30, and the preform that was prepared was subjected to the heat-set testing to evaluate the fouling on the surfaces of the metal mold with the eye.

(Example 9)

The pellets were heat-treated and a preform was prepared in the same manner as in Example 8 but treating the pellets to be crystallized and, thereafter, treating the pellets under a condition of 180˚C to decrease the amounts of the MHET and BHET. The pellets and the preform were variously measured and were, thereafter, subjected to the heat-set testing to evaluate the fouling on the surfaces of the metal mold with the eye.

(Example 10)

The pellets were heat-treated and a preform was prepared in the same manner as in Example 8 but treating the pellets to be crystallized and, thereafter, treating the pellets under a condition of 200˚C to decrease the amounts of the MHET and BHET. The pellets and the preform were variously measured and were, thereafter, subjected to the heat-set testing to evaluate the fouling on the surfaces of the metal mold with the eye.

(Example 11)

The pellets were heat-treated and a preform was prepared in the same manner as in Example 8 but using melt-polymerized PET resin pellets in an amorphous state having an intrinsic viscosity of 0.79 dL/g, a total content of the MHET and BHET of 0.0053% by weight, an acetaldehyde concentration of 28.0 ppm and a content of a copolymerizable component of DEG of 1.0% by weight. The pellets and the preform were variously measured and were, thereafter, subjected to the heat-set testing to evaluate the fouling on the surfaces of the metal mold with the eye.

(Example 12)

The pellets were heat-treated and a preform was prepared in the same manner as in Example 11 but treating the pellets to be crystallized and, thereafter, treating the pellets under a condition of 200˚C for 1 hour to decrease the amounts of the MHET and 3HET. The pellets and the preform were variously measured and were, thereafter, subjected to the heat-set testing to evaluate the fouling on the surfaces of the metal mold with the eye.

(Comparative Example 9)

The pellets were heat-treated and a preform was prepared in the same manner as in Example 8 but treating the pellets to be crystallized and, thereafter, treating the pellets under a condition of 160˚C to decrease the amounts of the MHET and BHET. The pellets and the preform were variously measured and were, thereafter, subjected to the heat-set testing to evaluate the fouling on the surfaces of the metal mold with the eye.

(Comparative Example 10)

The pellets were heat-treated and a preform was prepared in the same manner as in Example 8 but without conducting the treatment for decreasing the amounts of the BHET and BHET after the pellets have been crystallized. The pellets and the preform were variously measured and were, thereafter, subjected to the heat-set testing to evaluate the fouling on the surfaces of the metal mold with the eye.

(Comparative Example 11)

The pellets were heat-treated and a preform was prepared in the same manner as in Example 9 but using melt-polymerized PET resin pellets in an amorphous state having an intrinsic viscosity of 0.74 dL/g, a total content of the MHET and BHET of 0.0059% by weight, an acetaldehyde concentration of 25.0 ppm and a content of copolymerizable components of DEG and IPA of 1.7% by weight. The pellets and the preform were variously measured and were, thereafter, subjected to the heat-set testing to evaluate the fouling on the surfaces of the metal mold with the eye.

(Comparative Example 12)

The pellets were heat-treated and a preform was prepared in the same manner as in Example 9 but using melt-polymerized PET resin pellets in an amorphous state having an intrinsic viscosity of 0.64 dL/g, a total content of the MHET and BHET of 0.0088% by weight, an acetaldehyde concentration of 35.0 ppm and a content of copolymerizable components of DEG and IPA of 2.5% by weight. The pellets and the preform were variously measured and were, thereafter, subjected to the heat-set testing to evaluate the fouling on the surfaces of the metal mold with the eye.

(Comparative Example 13)

The pellets were heat-treated and a preform was prepared in the same manner as in Example 9 but using melt-polymerized PET resin pellets in an amorphous state having an intrinsic viscosity of 0.76 dL/g, a total content of the MHET and BHET of 0.0054% by weight, an acetaldehyde concentration of 26.5 ppm and a content of copolymerizable components of DEG and IPA of 2.4% by weight. The pellets and the preform were variously measured and were, thereafter, subjected to the heat-set testing to evaluate the fouling on the surfaces of the metal mold with the eye.

(Comparative Example 14)

The pellets were heat-treated and a preform was prepared in the same manner as in Example 9 but using melt-polymerized PET resin pellets in an amorphous state having an intrinsic viscosity of 0.86 dL/g, a total content of the MHET and BHET of 0.0052% by weight, an acetaldehyde concentration of 45.0 ppm and a content of copolymerizable components of DEG and IPA of 3.0% by weight. The pellets and the preform were variously measured and were, thereafter, subjected to the heat-set testing to evaluate the fouling on the surfaces of the metal mold with the eye.

(Comparative Example 15)

The pellets were heat-treated and a preform was prepared in the same manner as in Example 8 but using solid state polymerized PET resin pellets RT543CTHP (manufactured by NIHON UNIPET Co.) having an intrinsic viscosity of 0.73 dL/g, a total content of the MHET and BHET of 0.0043% by weight, an acetaldehyde concentration of 0.5 ppm and a content of a copolymerizable component of DEG of 1.2% by weight, and forming the preform after the drying step conducted at 1.50˚C for 4 hours. The pellets and the preform were variously measured and were, thereafter, subjected to the heat-set testing to evaluate the fouling on the surfaces of the metal mold with the eye.

(Comparative Example 16)

The pellets were heat-treated and a preform was prepared in the same manner as in Example 8 but using solid state polymerized PET resin pellets BK6180B (manufactured by NIHON UNIPET Co.) having an intrinsic viscosity of 0.83 dL/g, a total content of the MHET and BHET of 0.0021% by weight, an acetaldehyde concentration of 0.7 ppm and a content of copolymerizable components of DEG and IPA of 2.8% by weight, and forming the preform after the drying step conducted at 150 ˚C for 4 hours. The pellets and the preform were variously measured and were, thereafter, subjected to the heat-set testing to evaluate the fouling on the surfaces of the metal mold with the eye.

(Comparative Example 17)

The pellets were heat-treated and a preform was prepared in the same manner as in Example 8 but using solid state polymerized PET resin pellets RT523C (manufactured by NIHON UNIPET Co.) having an intrinsic viscosity of 0.70 dL/g, a total content of the MHET and BHET of 0.0041% by weight, an acetaldehyde concentration of 0.7 ppm and a content of a copolymerizable components of DEG and IPA of 1.7% by weight, and forming the preform after the drying step conducted at 150 ˚C for 4 hours. The pellets and the preform were variously measured and were, thereafter, subjected to the heat-set testing to evaluate the fouling on the surfaces of the metal mold with the eye.

(Example 13)

The melt state polymerized PET resin pellets that have been treated to decrease the amounts of the MHET and BHET same as Example 9 and the solid state polymerized PET resin pellets same as Comparative Example 16 were blended at a ratio of 30: 70, whereafter, a preform was prepared after a dry process at 150 ˚C for 4 hours. The preform was measured for its intrinsic viscosity, peak time of isothermal crystallization at 210˚C, energy of isothermal crystallization, a total content of the MHET and BHET, and a content of the acetaldehyde. Further, the mouth portion of the preform was crystallized to find the time until the crystallinity (Xc) exceeded 0.30, and the preform that was prepared was subjected to the heat-set testing to evaluate the fouling on the surfaces of the metal mold with the eye.

(Example 14)

The melt state polymerized PET resin pellets that have been treated to decrease the amounts of the MHET and BHET same as Example 9 and the solid state polymerized PET resin pellets same as Comparative Example 16 were blended at a ratio of 20:80, thereafter, a preform was prepared after a dry process at 150 ˚C for 4 hours. The preform was measured for its intrinsic viscosity, peak time of isothermal crystallization at 210˚C, energy of isothermal crystallization, a total content of the MHET and BHET, and a content of the acetaldehyde. Further, the mouth portion of the preform was crystallized to find the time until the crystallinity (xc) exceeded 0.30, and the preform that was prepared was subjected to the heat-set testing to evaluate the fouling on the surfaces of the metal mold with the eye

The results of the above Examples and Comparative Examples were as shown in Tables 4 and 5.

Table 4

| | | Pellets (before treated) | | | | Treatment for decrease | |
|---|---|---|---|---|---|---|---|
| | | Intrinsic viscosity | Total content of MHET and BHET | Acetaldehyde | Total content of DEG and IPA | Temp. | Time |
| | | dL/g | wt% | ppm | wt% | °C | h |
| Ex. 8 | MSP | 0.68 | 0.0101 | 44.3 | 1.3 | 170 | 4 |
| Ex. 9 | MSP | 0.68 | 0.0101 | 44.3 | 1.3 | 180 | 4 |
| Ex. 10 | MSP | 0.68 | 0.0101 | 44.3 | 1.3 | 200 | 4 |
| Ex. 11 | MSP | 0.79 | 0.0053 | 28.0 | 1.0 | 180 | 4 |
| Ex. 12 | MSP | 0.79 | 0.0053 | 28.0 | 1.0 | 200 | 1 |
| Comp. Ex. 9 | MSP | 0.68 | 0.0101 | 44.3 | 1.3 | 160 | 4 |
| Comp. Ex. 10 | MSP | 0.68 | 0.0101 | 44.3 | 1.3 | -- | -- |
| Comp. Ex. 11 | MSP | 0.74 | 0.0059 | 25.0 | 1.7 | 180 | 4 |
| Comp. Ex. 12 | MSP | 0.64 | 0.0088 | 35.0 | 2.5 | 180 | 4 |
| Comp. Ex. 13 | MSP | 0.76 | 0.0054 | 26.5 | 2.4 | 180 | 4 |
| Comp. Ex. 14 | MSP | 0.86 | 0.0052 | 45.0 | 3.0 | 180 | 4 |
| Comp. Ex. 15 | SSP | 0.73 | 0.0043 | 0.5 | 1.2 | -- | -- |
| Comp. Ex. 16 | SSP | 0.82 | 0.0021 | 0.7 | 2.8 | -- | -- |
| Comp. Ex. 17 | SSP | 0.70 | 0.0041 | 0.7 | 1.7 | -- | -- |

| | Pellets (after treated) | | | | | |
|---|---|---|---|---|---|---|
| | Intrinsic viscosity | Peak time of isothermal crystallization | Energy of isothermal crystallization | Total content of MHET and BHET | Acetaldehyde | Content of components of mol. wt. of less than 10000 |
| | dL/g | sec | J/g | wt% | ppm | % |
| Ex. 8 | 0.68 | 281 | 34.0 | 0.0049 | 9.2 | 12.7 |
| Ex. 9 | 0.69 | 282 | 33.4 | 0.0047 | 3.7 | 12.5 |
| Ex. 10 | 0.70 | 285 | 32.9 | 0.0039 | 2.9 | 12.3 |
| Ex. 11 | 0.79 | 258 | 37.1 | 0.0031 | 5.8 | 9.8 |
| Ex. 12 | 0.79 | 256 | 37.9 | 0.0048 | 9.7 | 9.8 |
| Comp. Ex. 9 | 0.68 | 282 | 33.6 | 0.0067 | 18.0 | 12.7 |
| Comp. Ex. 10 | 0.68 | 284 | 33.0 | 0.0101 | 29.3 | 9.8 |
| Comp. Ex. 11 | 0.74 | 385 | 29.6 | 0.0040 | 4.2 | 9.1 |
| Comp. Ex. 12 | 0.64 | 796 | 13.5 | 0.0042 | 7.7 | 14.3 |
| Comp. Ex. 13 | 0.76 | 825 | 12.1 | 0.0043 | 6.9 | 10.6 |
| Comp. Ex. 14 | 0.86 | 700 | 15.8 | 0.0024 | 9.8 | 7.6 |
| Comp. Ex. 15 | 0.73 | 763 | 47.3 | 0.0043 | 0.5 | 9.8 |
| Comp. Ex. 16 | 0.82 | 901 | 23.5 | 0.0021 | 0.7 | 6.3 |
| Comp. Ex. 17 | 0.70 | 741 | 57.3 | 0.0041 | 0.7 | 10.8 |

EP 2 371 874 A1

| Table 4 (continued) | | | | | | | |
|---|---|---|---|---|---|---|---|
| | Preform | | | | | | |
| | Intrinsic viscosity | Peak time of isothermal crystallization | Energy of isothermal crystallization | Total content of MHET and BHET | (1) | Time until $\chi c > 0.30$ | (2) |
| | dL/g | sec | J/g | wt% | ppm | sec | |
| Ex. 8 | 0.66 | 14 | 32.8 | 0.0073 | 14.6 | 70 | ○ |
| Ex. 9 | 0.66 | 14 | 32.6 | 0.0070 | 11.2 | 70 | ○ |
| Ex. 10 | 0.68 | 14 | 31.9 | 0.0068 | 10.3 | 70 | ○ |
| Ex. 11 | 0.77 | 19 | 23.3 | 0.0068 | 12.5 | 80 | ○ |
| Ex. 12 | 0.77 | 19 | 23.1 | 0.0079 | 14.8 | 80 | ○ |
| Comp. Ex. 9 | 0.66 | 13 | 33.5 | 0.0086 | 23.3 | 80 | ○ |
| Comp. Ex. 10 | 0.67 | 13 | 32.5 | 0.0124 | 25.6 | 80 | × |
| Comp. Ex. 11 | 0.72 | 65 | 24.3 | 0.0066 | 13.5 | 90 | ○ |
| Comp. Ex. 12 | 0.65 | 82 | 23.3 | 0.0068 | 10.5 | 100 | ○ |
| Comp. Ex. 13 | 0.74 | 102 | 34.8 | 0.0071 | 13.8 | 100 | ○ |
| Comp. Ex. 14 | 0.84 | 118 | 14.2 | 0.0059 | 19.2 | 100 | ○ |
| Comp. Ex. 15 | 0.70 | 67 | 22.1 | 0.0103 | 9.2 | 90 | × |
| Comp. Ex. 16 | 0.82 | 115 | 14.0 | 0.0061 | 10.7 | 100 | ○ |
| Comp. Ex. 17 | 0.67 | 62 | 28.7 | 0.0089 | 7.9 | 90 | ○ |

(1): Acetaldehyde

(2): Fouling on the surface of heat resistant blow metal mold

Table 5

Pellets (after treated)

| | Resin 1 | Resin 2 | Ratio of resin 1 wt% | Total content of DEG and IPA wt% |
|---|---|---|---|---|
| Ex. 13 MSP/SSP | Ex. 2 | Comp. Ex. 8 | 30 | 1.0 |
| Ex. 14 MSP/MSP | Ex. 2 | Comp. Ex. 6 | 20 | 2.7 |

24

Table 5 (continued)

| | | Preform | | | | | |
|---|---|---|---|---|---|---|---|
| | Intrinsic viscosity | Peak time of isothermal crystallization | Energy of isothermal crystallization | Total content of MHET and BHET | Acetaldehyde | Time until $\chi c > 0.30$ | |
| | dL/g | sec | J/g | wt% | ppm | sec | (1) |
| Ex. 13 | 0.75 | 24 | 22.7 | 0.0037 | 9.1 | 80 | ○ |
| Ex. 14 | 0.71 | 50 | 27.5 | 0.0093 | 13.9 | 70 | ○ |

(1): Fouling on the surface of heat resistant blow metal mold

Industrial Applicability:

The PET resin of the present invention contains less monomer components such as MHET and BHET which have particularly low melting points and are considered to cause adhesion of the polymer components and the oligomer components such as cyclic trimer. Therefore, the PET resin of the invention is free from the problems such as the resin adheres on the surfaces of the conveyer metal molds at the time of compression forming causing a decrease in the formability, the resin clogs in the air vents of the metal molds at the time of injection forming necessitating a frequent cleaning, the cyclic trimer and the resin adhere on the surfaces of the metal molds at the time of heat-setting causing a decrease in the transparency of the containers due to roughened surfaces and requiring a frequent cleaning of the metal molds. Therefore, the PET resin of the present invention can be injection-formed and compression-formed maintaining good productivity, and can be used for producing packing containers of various forms.

Further, the PET resin can be easily crystallized having a peak time of crystallization of not longer than 360 seconds and, further, having the energy of crystallization ($\Delta H$) of as large as 30 J/g or more in the isothermal crystallization at 210˚C. Therefore, the rate of crystallization is high, so the crystallization of the mouth portion and heat-set which are necessary for enhancing a heat-resistant can be efficiently performed. Accordingly, the PET resin of the invention can be favorably utilized, particularly, for forming heat-resistant containers.

Moreover, the crystallinity of the PET resin pellets of the invention is lower than that of the polyester resin obtained through the solid state polymerization. Therefore, the rate of the diffusion of the acetaldehyde in the pellets does not become slow easily, and the amount of the acetaldehyde can be efficiently decreased within short periods of time even if a temperature is lower than necessary for the solid state polymerization, providing excellent flavor-retaining property. Therefore, the PET resin can also be favorably used for the containers for containing water and the like which place importance on the flavor-retaining property.

## Claims

1. An ethylene terephthalate type polyester resin for forming containers, having an intrinsic viscosity in a range of 0.65 to 0.85 dL/g, a total content of a monohydroxyethyl terephthalate and a bishydroxyethyl terephthalate of less than 0.005% by weight, a heat of fusion of not more than 50 J/g, a end temperature of melting peak of not higher than 270˚C and a crystallinity of less than 0.48.

2. A preform obtained by compression-forming or infection-forming a molten resin the ethylene terephthalate type polyester resin of claim 1, the preform having a total content of the monohydroxyethyl terephthalate and the bishydroxyethyl terephthalate of less than 0.010% by weight, an acetaldehyde content of not more than 15 ppm and an intrinsic viscosity that varies by not more than 3% from the intrinsic viscosity of said ethylene terephthalate type polyester resin.

3. An ethylene terephthalate type polyester resin for forming heat-resistant containers, having an intrinsic viscosity in a range of 0.65 to 0.80 dL/g, a total content of a monohydroxyethyl terephthalate and a bishydroxyethyl terephthalate of less than 0.005% by weight, an acetaldehyde concentration of 2 to 10 ppm, and satisfying at least either one of:

   (i) a peak time of crystallisation is not longer than 360 seconds and the energy of crystallization ($\Delta H$) is not less than 30 J/g in the isothermal crystallization at 210˚C; or
   (ii) components having molecular weights of not larger than 10000 are contained in not less than 8%.

4. The ethylene terephthalate type polyester resin for forming heat-resistant containers according to claim 3, wherein the total amount of a diethylene glycol and an isophthalic acid contained as copolymerizable components is not more than 1.5% by weight.

5. A preform comprising the ethylene terephthalate type polyester resin of claim 3, and having an intrinsic viscosity in a range of 0.65 to 0.80 dL/g, a total content of the monohydroxyethyl terephthalate and the bishydroxyethyl terephthalate of less than 0.010% by weight, an acetaldehyde concentration of not more than 15 ppm, a peak time of crystallization of not longer than 60 seconds and the crystallization energy ($\Delta H$) of not less than 20 J/g in the isothermal crystallization at 210˚C.

6. The preform according to claim 5, wherein the total amount of a diethylene glycol and an isophthalic acid contained as copolymerizable components is not more than 2.7% by weight.

7. A process for producing an ethylene terephthalate type polyester resin by heat-treating an ethylene terephthalate type polyester resin, which obtained by the melt state polymerization, at a temperature of 160 to 220˚C for not less than 1 hour but less than 5 hours.

**INTERNATIONAL SEARCH REPORT**

| International application No. |
| --- |
| PCT/JP2009/071592 |

A. CLASSIFICATION OF SUBJECT MATTER
*C08G63/183*(2006.01)i, *B29C49/02*(2006.01)i, *B29C49/08*(2006.01)i, *B65D1/00*
(2006.01)i

According to International Patent Classification (IPC) or to both national classification and IPC

B. FIELDS SEARCHED

Minimum documentation searched (classification system followed by classification symbols)
C08G63/00-63/91, B29C49/00-49/80, B65D1/00-1/48

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | WO 2006/059605 A1  (Asahi Kasei Chemicals Corp.), 08 June 2006 (08.06.2006), claims; paragraphs [0029] to [0045], [0138], [0146] to [0150]; examples & US 2008/0260979 A1    & EP 1818352 A1 & KR 10-2007-0090225 A | 1-7 |
| X | JP 2008-266360 A  (Toyobo Co., Ltd.), 06 November 2008 (06.11.2008), claims; paragraphs [0180] to [0189], [0218]; examples (Family: none) | 1-7 |

| ☒ | Further documents are listed in the continuation of Box C. | ☐ | See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 March, 2010 (02.03.10) | 16 March, 2010 (16.03.10) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2009/071592 |

C (Continuation).    DOCUMENTS CONSIDERED TO BE RELEVANT

| Category* | Citation of document, with indication, where appropriate, of the relevant passages | Relevant to claim No. |
| --- | --- | --- |
| X | JP 2007-119644 A  (Toyo Seikan Kaisha, Ltd.), 17 May 2007 (17.05.2007), claims; paragraphs [0013] to [0026]; examples (Family: none) | 1-7 |
| A | JP 2006-316095 A  (Teijin Fibers Ltd.), 24 November 2006 (24.11.2006), claims; examples (Family: none) | 1-7 |
| A | JP 2006-176614 A  (Toyo Seikan Kaisha, Ltd.), 06 July 2006 (06.07.2006), claims; paragraph [0022]; examples (Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001121273 A